# EUROPEAN PATENT APPLICATION

(11) **EP 4 521 819 A1**
(43) Date of publication of application: **12.03.2025**
(21) Application number: 22940658.2
(22) Date of filing: 06.05.2022
(51) Int. Cl.: H04W 28/24

(54) **BIDIRECTIONAL DELAY STATE INFORMATION PROCESSING METHOD AND APPARATUS, AND READABLE STORAGE MEDIUM**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN); MAO, Yuxin, Beijing 100085 (CN)
(74) Representative: König, Andreas Rudolf
(86) International application number: PCT/CN2022/091322
(87) International publication number: WO 2023/212964

(57) **Abstract**

Provided in the present disclosure are a bidirectional delay state information processing method and apparatus, and a readable storage medium. The method is used for a network exposure function (NEF). The method comprises: receiving a subscribe request message, which is sent by an application function (AF), wherein the subscribe request message is used for requesting the subscription of bidirectional delay state information of an XRM service (S201); and receiving report information based on the subscribe request message, and sending the report information to the AF (S202). Therefore, a corresponding subscribe request message may be customized according to an XRM service requested for subscription, such that bidirectional delay state information corresponding to the subscribed XRM service can be accurately learned during the process of processing the XRM service requested for subscription.

## Description

### TECHNICAL FIELD

The disclosure relates to the field of wireless communication technology, in particular to a method for processing round-trip (RT) latency status information, an apparatus for processing RT latency status information, a device and a storage medium.

### BACKGROUND

Mobile media services, cloud augmented reality (AR)/virtual reality (VR) and other extended reality (XR) services, cloud gaming, video-based machine or drone remote control, and other services are expected to contribute increasing traffic to 5G networks. The XR service involve a multimodal data flow. Multimodal data refers to data input by the same business/application from the same device or different devices (including sensors). Those data may be output to one or more designated device terminals.

Extended reality and media (XRM) services require 5G systems (5GSs) to comprehensively consider quality of service (QoS) characteristics of relevant data flows of services. For example, for guaranteed bit rate (GBR) data flows with strict latency requirements, it is necessary to consider whether parameters such as guaranteed flow bit rate (GFBR), packet delay budget (PDB) and default maximum data burst volume (MDBV), may be met and coordinated at the same time. When a plurality of XRM data flows of a user equipment (UE) and XRM data flows of a plurality of UEs are involved, it is necessary to consider the consistency guarantee of QoS authorization and execution of each other.

### SUMMARY

In view of this, the disclosure provides a method for processing round-trip (RT) status information, an apparatus for processing RT latency status information, a device and a storage medium.

According to a first aspect of embodiments of the disclosure, a method for processing RT latency status information is provided. The method is applied to a network exposure function (NEF). The method includes:
receiving a subscribe request message sent by an application function (AF), in which the subscribe request message is configured to request for subscribing RT latency status information of an extended reality and media (XRM) service; and
receiving report information, and sending the report information to the AF, in which the report information is based on the subscribe request message.

In some exemplary embodiments, the subscribe request message includes an event measurement mode requested to be subscribed, and the event measurement mode includes one of: an indication of calculating an RT latency, a measurement frequency, or a measurement window.

In some exemplary embodiments, the subscribe request message includes an event requested to be subscribed, and the event includes at least one of: an RT latency value, an uplink latency value, a downlink latency value, or a ratio of the RT latency value to a maximum RT latency value.

In some exemplary embodiments, the subscribe request message includes an event reporting mode requested to be subscribed, the event reporting mode includes one of: a threshold for triggering reporting or a cycle time interval for triggering reporting, in which a current threshold is reported in a case that the threshold is reached, or a current value is reported in a case that the cycle time interval is reached.

In some exemplary embodiments, the subscribe request message further includes an immediate reporting sign, the sign indicates that a current value requested is reported immediately upon receipt of a request.

In some exemplary embodiments, the subscribe request message further includes subscribe request event filter information to determine a range of a data flow for measuring the RT latency status information;
the subscribe request event filter information includes one or more of:
an RT latency for a range of single network slice selection assistance information (S-NSSAI), an RT latency for the XRM service, an RT latency for all user equipments (UEs) of an XRM service group, an RT latency for an extended reality (XR) service of a preset UE, or an RT latency for the XRM service of S-NSSAI and data network name (DNN).

In some exemplary embodiments, the method further includes:
sending the subscribe request message to a policy control function (PCF).

In some exemplary embodiments, the method further includes:
in a case that there are a plurality of PCFs, sending, by the NEF, the subscribe request message to the plurality of PCFs.

In some exemplary embodiments, receiving the report information which is based on the subscribe request message, and sending the report information to the AF, include:
in a case that a plurality of pieces of report information based on the subscribe request message are received, aggregating, by the NEF, the plurality of pieces of report information and sending aggregated report information to the AF. According to a second aspect of embodiments of the disclosure, a method for processing RT latency status information is provided. The method is applied to a PCF. The method includes:
receiving a subscribe request message, in which the subscribe request message is configured to request for subscribing RT latency status information of an XRM service; and
generating a quality of service (QoS) monitoring policy based on the subscribe request message, in which the QoS monitoring policy is configured for performing QoS monitoring for a data flow and for measuring the RT latency status information.

In some exemplary embodiments, receiving the subscribe request message, includes:
receiving the subscribe request message from a NEF; or
receiving the subscribe request message from an AF.

In some exemplary embodiments, measuring the RT latency status information includes: measuring the RT latency status information based on packet latencies of downlink and uplink.

In some exemplary embodiments, measuring the RT latency status information based on the packet latencies of the downlink and the uplink includes: determining a maximum latency experienced by a sequence of consecutive packets transmitted in the downlink and a maximum latency experienced by a sequence of consecutive packets transmitted in the uplink through a sliding window.

According to a third aspect of embodiments of the disclosure, a method for processing RT latency status information is provided. The method is applied to a session management function (SMF). The method includes:
receiving a QoS monitoring policy sent by a PCF; and
generating a QoS monitoring configuration corresponding to the QoS monitoring policy based on the QoS monitoring policy.

According to a fourth aspect of embodiments of the disclosure, a method for processing RT latency status information is provided. The method is applied to a user plane function (UPF). The method includes:
receiving a QoS monitoring configuration sent by an SMF; and
initiating a function for measuring RT latency status information based on the QoS monitoring configuration.

In some exemplary embodiments, the method further includes:
after determining that a reporting condition of the QoS monitoring configuration is met, sending report information to a NEF, in which the report information includes a measurement result.

According to a fifth aspect of embodiments of the disclosure, a method for processing RT latency status information is provided. The method is performed by a core network device. The method includes:
receiving, by a NEF, a subscribe request message sent by an AF, in which the subscribe request message is configured to request for subscribing RT latency status information of an XRM service;
sending, by the NEF, the subscribe request message to a PCF; and
receiving, by the NEF, report information sent by an UPF, and sending the report information to the AF.

In some exemplary embodiments, the method further includes:
receiving, by the PCF, the subscribe request message;
generating, by the PCF, a QoS monitoring policy based on the subscribe request message, in which the QoS monitoring policy is configured for performing QoS monitoring for a data flow and for measuring the RT latency status information; and
sending, by the PCF, the QoS monitoring policy to an SMF.

In some exemplary embodiments, the method further includes:
receiving, by the SMF, the QoS monitoring policy;
generating, by the SMF, a QoS monitoring configuration corresponding to the QoS monitoring policy based on the QoS monitoring policy; and
sending, by the SMF, the QoS monitoring configuration to the UPF.

In some exemplary embodiments, the method further includes:
receiving, by the UPF, the QoS monitoring configuration;
initiating, by the UPF, a function for measuring the RT latency status information based on the QoS monitoring configuration; and
after determining, by the UPF, that a reporting condition of the QoS monitoring configuration is met, sending the report information to the NEF to report a measurement result.

According to a sixth aspect of embodiments of the disclosure, a method for processing RT latency status information is provided. The method is performed by a core network device. The method includes:
receiving, by a PCF, a subscribe request message sent by an AF, in which the subscribe request message is configured to request for subscribing RT latency status information of an XRM service.

In some exemplary embodiments, the method further includes:
generating, by the PCF, a QoS monitoring policy based on the subscribe request message, in which the QoS monitoring policy is configured for performing QoS monitoring for data flows and for measuring the RT latency status information; and
sending, by the PCF, the QoS monitoring policy to an SMF.

In some exemplary embodiments, the method further includes:
receiving, by the SMF, the QoS monitoring policy;
generating, by the SMF, a QoS monitoring configuration corresponding to the QoS monitoring policy based on the QoS monitoring policy; and
sending, by the SMF, the QoS monitoring configuration to an UPF.

In some exemplary embodiments, the method further includes:
receiving, by the UPF, the QoS monitoring configuration;
initiating, by the UPF, a function for measuring the RT latency status information based on the QoS monitoring configuration; and
after determining, by the UPF, that a reporting condition of the QoS monitoring configuration is met, sending the report information to a NEF to report a measurement result.

In some exemplary embodiments, the method further includes:
sending, by the NEF, the report information to the AF.

According to a seventh aspect of embodiments of the disclosure, an apparatus for processing RT latency status information is provided. The apparatus is applied to a NEF. The apparatus includes a first transceiver module;
in which, the first transceiver module is configured to receive a subscribe request message sent by an AF, where the subscribe request message is configured to request for subscribing RT latency status information of an XRM service, and to receive report information and send the report information to the AF, in which the report information is based on the subscribe request message.

According to an eighth aspect of embodiments of the disclosure, an apparatus for processing RT latency status information is provided. The apparatus is applied to a PCF. The apparatus includes a second transceiver module;
in which the second transceiver module is configured to receive a subscribe request message, where the subscribe request message is configured to request for subscribing RT latency status information of an XRM service; and to generate a QoS monitoring policy based on the subscribe request message, where the QoS monitoring policy is configured for performing QoS monitoring for a data flow and for measuring the RT latency status information.

According to a ninth aspect of embodiments of the disclosure, an apparatus for processing RT latency status information is provided. The apparatus is applied to an SMF. The apparatus includes a third transceiver module;
in which the third transceiver module is configured to receive a QoS monitoring policy sent by a PCF, and generate a QoS monitoring configuration corresponding to the QoS monitoring policy based on the QoS monitoring policy.

According to a tenth aspect of embodiments of the disclosure, an apparatus for processing RT latency status information is provided. The apparatus is applied to an UPF. The apparatus includes a fourth transceiver module;
in which the fourth transceiver module is configured to receive a QoS monitoring configuration sent by an SMF, and initiate a function for measuring RT latency status information based on the QoS monitoring configuration.

According to a eleventh aspect of embodiments of the disclosure, an apparatus for processing RT latency status information is provided. The apparatus is applied to a core network. The apparatus includes:
a first transceiver module, configured to receive, by a NEF, a subscribe request message sent by an AF, in which the subscribe request message is configured to request for subscribing RT latency status information of an XRM service; send, by the NEF, the subscribe request message to a PCF; and receive, by the NEF, report information sent by an UPF and send the report information to the AF.

According to a twelfth aspect of embodiments of the disclosure, an apparatus for processing RT latency status information is provided. The apparatus is applied to a core network. The apparatus includes:
a second transceiver module, configured to receive, by a PCF, a subscribe request message sent by an AF, in which the subscribe request message is configured to request for subscribing RT latency status information of an XRM service.

According to a thirteenth aspect of embodiments of the disclosure, a communication device is provided. The communication device includes: a processor and a memory.

The memory is configured to store a computer program.

The processor is configured to execute the computer program to implement the methods provided by an exemplary embodiment of the disclosure.

According to a fourteenth aspect of embodiments of the disclosure, a computer-readable storage medium having instructions stored therein is provided. When the instructions are called and executed by a computer, the computer is caused to implement the methods provided by an exemplary embodiment of the disclosure.

The technical solutions provided by embodiments of the disclosure may include the following beneficial effects: in an exemplary embodiment of the disclosure, the corresponding subscribe request message may be customized according to the XRM service requested to be subscribed, so that it is possible to accurately obtain the RT latency status information corresponding to the subscribed XRM service during the processing of the XRM service requested to be subscribed.

It should be understood that the above general description and the following detailed description are exemplary and explanatory only and do not limit the disclosure.

### BRIEF DESCRIPTION OF THE DRAWINGS

The accompanying drawings illustrated herein are used to provide a further understanding of embodiments of the disclosure and constitute a part of the application, and exemplary embodiments of the disclosure and illustrations thereof are used to explain embodiments of the disclosure and do not constitute an undue limitation of embodiments of the disclosure.

The accompanying drawings, which are incorporated in and constitute a part of this specification, illustrate embodiments consistent with the disclosure and, together with the specification, serve to explain principles of embodiments of the disclosure.
FIG. 1 is a schematic diagram of a wireless communication system according to an exemplary embodiment.
FIG. 2 is a flowchart of a method for processing round-trip (RT) latency status information according to an exemplary embodiment.
FIG. 3 is a flowchart of a method for processing RT latency status information according to an exemplary embodiment.
FIG. 4 is a flowchart of a method for processing RT latency status information according to an exemplary embodiment.
FIG. 5 is a flowchart of a method for processing RT latency status information according to an exemplary embodiment.
FIG. 6 is a flowchart of a method for processing RT latency status information according to an exemplary embodiment.
FIG. 7 is a flowchart of a method for processing RT latency status information according to an exemplary embodiment.
FIG. 8 is a flowchart of a method for processing RT latency status information according to an exemplary embodiment.
FIG. 9 is a flowchart of a method for processing RT latency status information according to an exemplary embodiment.
FIG. 10 is a schematic diagram of an apparatus for processing RT latency status information according to an exemplary embodiment.
FIG. 11 is a schematic diagram of an apparatus for processing RT latency status information according to an exemplary embodiment.
FIG. 12 is a schematic diagram of an apparatus for processing RT latency status information according to an exemplary embodiment.
FIG. 13 is a schematic diagram of an apparatus for processing RT latency status information according to an exemplary embodiment.

### DETAILED DESCRIPTION

Embodiments of the disclosure are further described in combination with the accompanying drawings and specific implementations.

Exemplary embodiments will be described in detail, examples of which are illustrated in the accompanying drawings. In the following description with reference to the accompanying drawings, the same numbers in different drawings represent the same or similar elements unless otherwise represented. The implementations set forth in the following description of exemplary embodiments do not represent all implementations consistent with embodiments of the disclosure. Instead, they are merely examples of apparatuses and methods consistent with aspects related to the disclosure as recited in the attached claims.

It should be noted that an embodiment of the disclosure may include a plurality of steps. These steps are numbered for ease of description. However, these numbers are not limitations on the execution slots and execution order of steps. These steps can be implemented in any order, which is not limited by the description of the disclosure.

In the description of this application, terms such as "first", "second" and "third" are only configured for the purpose of distinguishing and cannot be understood as indicating or implying relative importance or order. The term "plurality" means two or more than two.

The term "and/or" describes the association relationship of associated objects, and may indicate three kinds of relationships. For example, "A and/or B" may indicate three kinds of relationships, i.e., A exists alone, A and B both exist, and B exists alone.

Data flows in multimodal data often have certain or even strong correlations, such as synchronization of audio and video flows, synchronization of touch and vision, etc. There are some common characteristics in the data flows of this type of media services, among the data flows, and the requirements of these service data flows. The effective identification and utilization of these characteristics will be more conducive to transmission and control of the network and the services, and to service assurance and user experience.

Uplink-downlink transmission coordination to meet requirements of round-trip latency is a key issue in the research of extended reality and media (XRM) services in 5G systems (5GSs). In the related art, an application function (AF) may provide relevant latency requirements when requesting a quality of service (QoS) to provide reference for network authorization. However, a latency status (delay status) in the actual service process is changed dynamically and continuously by being affected by various factors in the network. The XRM services often need a plurality of data flows within a user equipment (UE) or different data flows of a plurality of UEs, to successfully authorize a corresponding QoS, then the service may be supported to implement. Therefore, the real-time or quasi-real-time latency status of the network may directly affect the QoS authorization of each data flow, so as to affect whether the XRM service-related function support in the 5GS may be successful. However, the existing 5GS has no perfect mechanism to support this requirement, and there is no corresponding technical solution to support the notification and report of the latency status, as well as the QoS resource request of the AF.

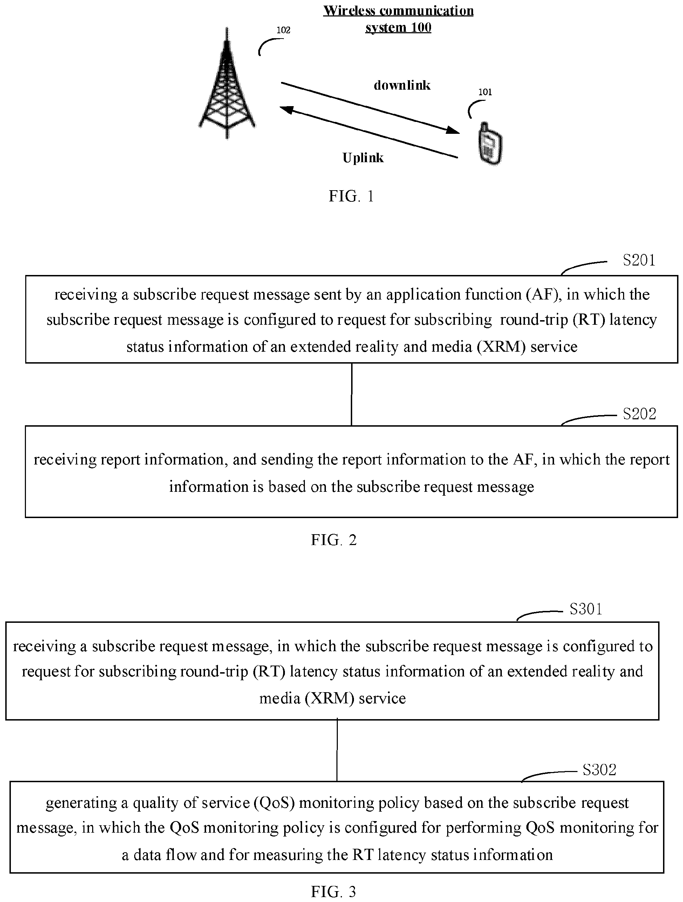

A data flow authorization method provided by embodiments of the disclosure may be applied to a wireless communication system 100 shown in FIG. 1. The wireless communication system 100 may include, but is not limited to, a network device 101 and a UE 102. The UE 102 is configured to support carrier aggregation. The UE 102 may be connected to a plurality of carrier units of the network device 101. The carrier units includes one primary carrier unit and one or more secondary carrier unit.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The above-described UE 102 may be a user equipment (UE), a terminal, an access terminal, a terminal unit, a terminal station, a mobile station (MS), a distant station, a remote terminal, a mobile terminal, a wireless communication device, a terminal agent, or a user device. The UE 102 may have a wireless transceiver function and is capable of communicating (e.g., wirelessly communicating) with one or more network devices 101 in one or more communication systems and accepting network services provided by the network device 101. The network device 101 includes, but is not limited to, a base station shown in the figure.

The UE 102 may be a cellular phone, a cordless phone, a session initiation protocol (SIP) phone, a wireless local loop (WLL) station, a personal digital assistant (PDA) device, a handheld device having a wireless communication function, a computing device or other processing devices connected to a wireless modem, a vehicle-mounted device, a wearable device, a UE in a future 5G network or a UE in a future evolved PLMN network, etc.

The network device 101 may be an access network device (or an access network site). The access network device refers to a device that provides a network access function, such as a radio access network (RAN) base station. The network device may specifically include a base station (BS), or include a BS device and a radio resource management device for controlling the BS device. The network device may also include a relay station (relay device), an access point, a BS in the future 5G network, a BS in the future evolved PLMN network, or a NR BS. The network device may be a wearable device, a vehicle-mounted device, or a communication chip with a communication module.

For example, the network device 101 includes, but is not limited to, a next generation BS (gNB, which is short for gnodeB) in 5G, an evolved node B (eNB) in an LTE system, a radio network controller (RNC), a node B (NB) in a wideband code division multiple access (WCDMA) system, a radio controller under a CRAN system, a BS controller (BSC), a base transceiver station (BTS) in a global mobile communication (GSM) system or a code division multiple access (CDMA) system, a home BS (HNB, which is short for home evolved node B or home node B), a baseband unit (BBU), a transmitting and receiving point (TRP), a transmitting point (TP), or a mobile switching center.

An embodiment of the disclosure provides a method for processing round-trip (RT) status information. The method is applied to a network exposure function (NEF). FIG. 2 is a flowchart of a method for processing RT latency status information according to an exemplary embodiment. As illustrated in FIG. 2, the method includes the following steps.

At step S201, a subscribe request message sent by an AF is received, in which the subscribe request message is configured to request for subscribing RT latency status information of an XRM service.

At step S202, report information, which is based on the subscribe request message, is received, and the report information is sent to the AF.

In exemplary embodiments of the disclosure, a method for processing RT latency status information is provided by taking into account a situation in which the latency status is changed dynamically and continuously by being affected by various factors in the network during actual business processes. The NEF receives the subscribe request message sent by the AF. The subscribe request message is configured to request for subscribing the RT latency status information of the XRM service. The NEF receives the report information, in which the report information is based on the subscribe request message, and sends the report information to the AF, to complete the subscription and the report of the RT latency status information of the XRM service requested to be subscribed.

In an exemplary embodiment of the disclosure, the corresponding subscribe request message may be customized according to the XRM service requested to be subscribed, so that the RT latency status information corresponding to the subscribed XRM service may be accurately obtained during the processing of the XRM service requested to be subscribed.

In an exemplary embodiment of the disclosure, the subscribe request message may include an event requested to be subscribed, and the event includes at least one of: an RT latency value, an uplink latency value, a downlink latency value, or a ratio of the RT latency value to a maximum RT latency value. The RT latency value may be a sum of the uplink latency value and the downlink latency value. The maximum RT latency value may be a maximum latency value set in the 5GS system during the XRM service. By obtaining the event requested to be subscribed, it is possible to accurately know the RT latency status information corresponding to the subscribed XRM service.

In an exemplary embodiment of the disclosure, the subscribe request may include an event measurement mode requested to be subscribed. The event measurement mode may include an event acquisition mode requested to be subscribed. The event measurement mode includes one of: an indication of calculating RT latency, a measurement frequency, or a measurement window. The indication of calculating the RT latency represents that an acquisition event of the RT latency status information is triggered upon receipt of the indication of calculating the RT latency, to obtain the RT latency status information. The measurement frequency represents a frequency for obtaining the RT latency status information. The measurement window represents a time window for obtaining the RT latency status information.

In an exemplary embodiment of the disclosure, the subscribe request may include an event reporting mode requested to be subscribed, the event reporting mode includes one of: a threshold for triggering reporting or a cycle time interval for triggering reporting, and a current value is reported when the threshold is reached, or a current value is reported when the cycle time interval is reached.

The subscribe request also includes an immediate reporting sign. The immediate reporting sign indicates that a current value requested is reported immediately upon receipt of a request. In an exemplary embodiment of the disclosure, according to the XRM service requested to be subscribed, the subscribe request may be set to include the event requested to be subscribed, the event measurement mode requested to be subscribed and/or the event reporting mode requested to be subscribed, so that the RT latency status information may be obtained as needed.

The subscribe request also includes subscribe request event filter information (or referred to as event filter parameter) to determine a range of a data flow for measuring the RT latency status information. The subscribe request event filter information includes one or more of:
an RT latency for a range of single network slice selection assistance information (S-NSSAI), an RT latency for the XRM service, an RT latency for all UEs of an XRM service group, an RT latency for an extended reality (XR) service of a preset UE, or an RT latency for the XRM service of S-NSSAI and data network name (DNN).

In an exemplary embodiment of the disclosure, the subscribe request may also include the subscribe request event filter information to determine the range of the data flow for measuring the RT latency, to obtain the corresponding RT latency status information as needed.

In an exemplary embodiment of the disclosure, the NEF receives the subscribe request message by receiving a Nnef_EventExposure request from the AF. The subscribe request message is configured to request for subscribing the RT latency status information of the XRM service. The subscribe request message may include the event requested to be subscribed, the event measurement mode requested to be subscribed and/or the event reporting mode requested to be subscribed. The NEF receives the report information which is based on the subscribe request message by receiving a Nupf_EventExposure_Notify, and sends the report information to the AF through a Nnef_Nnef_EventExposure_Notify, to complete the subscription request of the RT latency status information of the XRM service requested to be subscribed.

In exemplary embodiments of the disclosure, the method may further include: sending the subscribe request message to a policy control function (PCF). The PCF generates a QoS monitoring policy based on the subscribe request message. The QoS monitoring policy is configured for performing QoS monitoring for data flows and for measuring the RT latency status information, to facilitate a subsequent subscribe request process.

When a plurality of PCFs are included, the NEF may send the subscribe request messages to the plurality of PCFs simultaneously. Information included in the subscribe request messages sent to the PCFs may be the same or different. Each PCF generates a corresponding QoS monitoring policy based on the received subscribe request message, and sends the generated QoS monitoring policy to a session management function (SMF). The SMF generates the corresponding QoS monitoring configurations according to a plurality of received QoS monitoring policies and sends the QoS monitoring configurations to a user plane function (UPF). The UPF initiates a function of measuring RT latency status information according to a plurality of received QoS monitoring configurations. After determining that a reporting condition of the QoS monitoring configuration is met, the UPF sends report information to the NEF. The report information includes a measurement result. The NEF aggregates a plurality of pieces of received report information and sends the aggregated report information to the AF.

An embodiment of the disclosure provides a method for processing RT latency status information. The method is applied to a PCF. FIG. 3 is a flowchart of a method for processing RT latency status information according to an exemplary embodiment. As illustrated in FIG. 3, the method includes the following steps.

At step S301, a subscribe request message is received, in which the subscribe request message is configured to request for subscribing RT latency status information of an XRM service.

At step S302, a QoS monitoring policy is generated based on the subscribe request message, in which the QoS monitoring policy is configured for performing QoS monitoring for a data flow and for measuring the RT latency status information.

In an exemplary embodiment of the disclosure, the PCF receives the subscribe request message and generates the QoS monitoring policy based on the subscribe request message. The QoS monitoring policy is configured for performing QoS monitoring for the data flow and for measuring the RT latency status information. The PCF generates, according to the subscribe request message, the QoS monitoring policy for obtaining the RT latency status information, to accurately obtained the RT latency status information corresponding to the subscribed XRM service during the processing of the XRM service requested to be subscribed.

In an exemplary embodiment of the disclosure, the PCF may receive the subscribe request message from a NEF. That is, when the AF initiates a request for obtaining the RT latency status information, the AF may send the request to the NEF, and the NEF sends this request to the PCF. The PCF may also receive the subscribe request message directly from the AF. That is, when the AF initiates the request for obtaining the RT latency status information, the AF directly sends the subscribe request message to the PCF. In the actual application, the way in which the PCF receives the subscribe request message may be set according to actual needs.

In an exemplary embodiment of the disclosure, measuring the RT latency status information includes: measuring the RT latency status information based on packet latencies of downlink and uplink.

In an exemplary embodiment of the disclosure, measuring the RT latency status information based on the packet latencies of the downlink and the uplink includes: determining a maximum latency experienced by a sequence of consecutive packets transmitted in the downlink and a maximum latency experienced by a sequence of consecutive packets transmitted in the uplink through a sliding window.

The RT latency status information includes an RT latency value. The RT latency value may include a sum of a latency value of the maximum latency experienced by the sequence of consecutive packets transmitted in the downlink and a latency value of the maximum latency experienced by the sequence of consecutive packets transmitted in the uplink.

In an exemplary embodiment of the disclosure, the RT latency status information is determined by determining the maximum latency experienced by the sequence of consecutive packets transmitted in the downlink and the maximum latency experienced by the sequence of consecutive packets transmitted in the uplink, and then the RT latency status information corresponding to the subscribed XRM service is determined.

When a plurality of PCFs are included, the NEF may send the subscribe request messages to the plurality of PCFs simultaneously. The information included in the subscribe request messages sent to the PCFs may be the same or different. Each PCF generates a corresponding QoS monitoring policy according to the received subscribe request message.

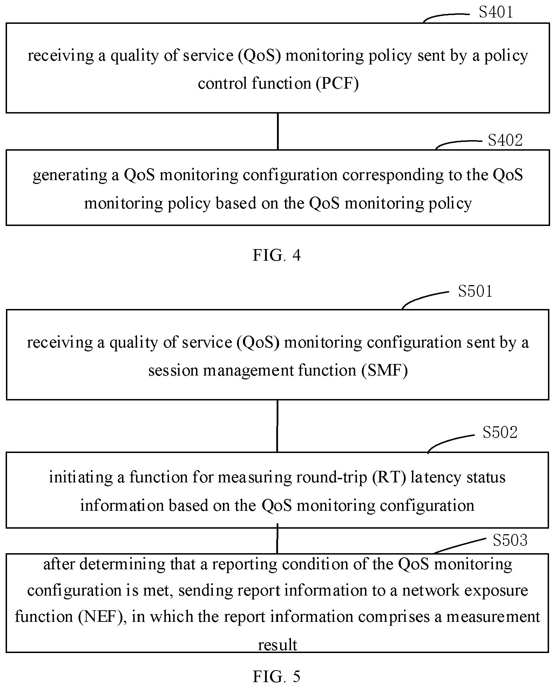

An embodiment of the disclosure provides a method for processing RT latency status information. The method is applied to a SMF. FIG. 4 is a flowchart of a method for processing RT latency status information according to an exemplary embodiment. As illustrated in FIG. 4, the method includes the following steps.

At step S401, a QoS monitoring policy sent by a PCF is received.

At step S402, a QoS monitoring configuration corresponding to the QoS monitoring policy is generated based on the QoS monitoring policy.

In an exemplary embodiment of the disclosure, the SMF receives the QoS monitoring policy from the PCF. After receiving the QoS monitoring policy, the SMF generates the QoS monitoring configuration corresponding to the QoS monitoring policy. In an exemplary embodiment of the disclosure, the SMF generates the corresponding QoS monitoring configuration according to the received QoS monitoring policy, so that the UPF may realize the function of measuring the RT latency status information, and accurately knows the RT latency status information corresponding to the subscribed XRM service during the processing of the XRM service requested to be subscribed.

In an exemplary embodiment of the disclosure, the SMF receives the QoS monitoring policy by receiving an Npcf_SMPPolicyControl_UpdateNotify request message. The SMF generates the QoS monitoring configuration corresponding to the PCF based on the QoS monitoring policy.

When a plurality of PCFs are included, the NEF sends the subscribe request messages to the plurality of PCFs simultaneously. The information included in the subscribe request messages sent to the PCFs may be the same or different. Each PCF generates the corresponding QoS monitoring policy according to the received subscribe request message. Each PCF sends the generated QoS monitoring policy to the SMF. The SMF generates corresponding QoS monitoring configurations according to the plurality of QoS monitoring policies received and sends the QoS monitoring configurations to the UPF.

An embodiment of the disclosure provides a method for processing RT latency status information. The method is applied to a UPF. FIG. 5 is a flowchart of a method for processing RT latency status information according to an exemplary embodiment. As illustrated in FIG. 5, the method includes the following steps.

At step S501, a QoS monitoring configuration sent by a SMF is received.

At step S502, a function for measuring RT latency status information is initiated based on the QoS monitoring configuration.

At step S503, after determining that a reporting condition of the QoS monitoring configuration is met, report information is sent to a NEF, in which the report information includes a measurement result.

In an exemplary embodiment of the disclosure, after receiving the QoS monitoring configuration from the SMF, the UPF initiates the function for measuring the RT latency status information based on the QoS monitoring configuration. After determining that the reporting condition of the QoS monitoring configuration is met, the UPF sends the report information to the NEF to report the measurement result, so that it is possible to accurately obtain the RT latency status information corresponding to the subscribed XRM service during the processing of the XRM service requested to be subscribed.

In an exemplary embodiment of the disclosure, the UPF receives the QoS monitoring configuration by receiving an Npcf_SMPolicyControl_UpdateNotify response message sent by the SMF. The UPF initiates the function for measuring the RT latency status information based on the QoS monitoring configuration. After determining that the reporting condition of the QoS monitoring configuration is met, the UPF sends the report information to the NEF via Nupf_EventExposure_Notify to report the measurement result. In this way, the subscription request of the RT latency status information of the XRM service requested to be subscribed is completed.

When a plurality of PCFs are included, the NEF sends the subscribe request messages to the plurality of PCFs simultaneously. The information included in the subscribe request messages sent to the PCFs may be the same or different. Each PCF generates the corresponding QoS monitoring policy according to the received subscribe request message. The PCFs send the generated QoS monitoring policies to the SMF. The SMF generates corresponding QoS monitoring configurations according to the plurality of QoS monitoring policies it receives and sends the QoS monitoring configurations to the UPF. The UPF initiates the function of measuring RT latency status information according to the plurality of QoS monitoring configurations it receives. After determining that the reporting condition of the QoS monitoring configuration is met, the UPF sends the report information to the NEF. The report information includes the measurement result. The report information includes a plurality of pieces of report information generated according to the plurality of QoS monitoring configurations.

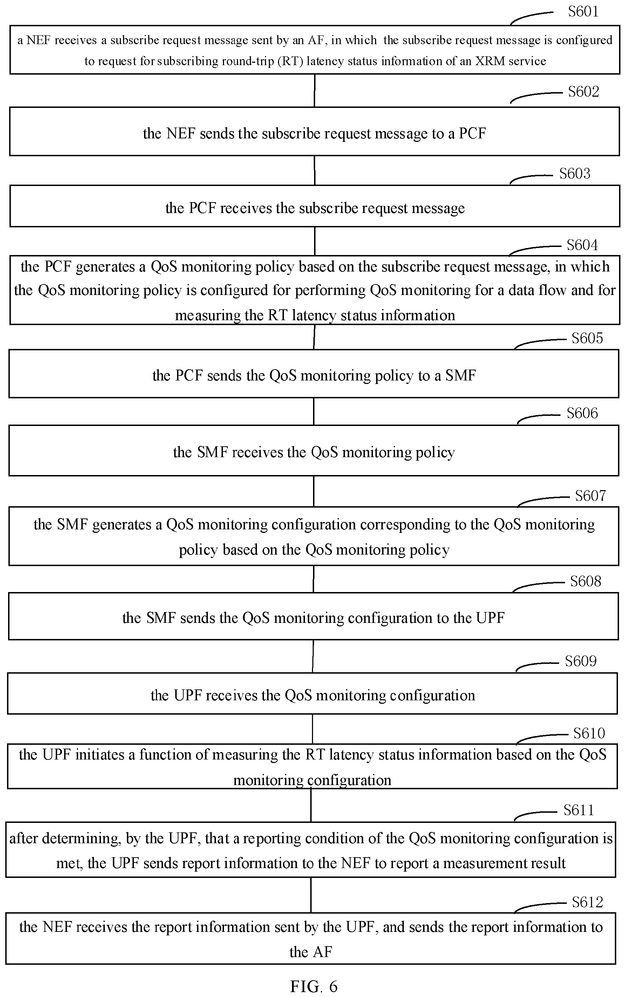

An embodiment of the disclosure provides a method for processing RT latency status information. The method is performed by a core network device. FIG. 6 is a flowchart of a method for processing RT latency status information according to an exemplary embodiment. As illustrated in FIG. 6, the method includes the following steps.

At step S601, a NEF receives a subscribe request message sent by an AF, in which the subscribe request message is configured to request for subscribing RT latency status information of an XRM service.

At step S602, the NEF sends the subscribe request message to a PCF.

At step S612, the NEF receives report information sent by an UPF, and sends the report information to the AF.

In an exemplary embodiment of the disclosure, the method for processing RT latency status information is performed by the core network device. The core network device includes the AF, the NEF, the PCF and the UPF.

The NEF receives the subscribe request message sent by the AF. The subscribe request message is configured to request for subscribing RT latency status information of the XRM service. The NEF sends the subscribe request message to the PCF according to the received subscribe request message. The NEF receives the report information from the UPF and sends the report information to the AF, to complete the subscription request of the RT latency status information of XRM service requested to be subscribed.

With reference to FIG. 6, between step S602 and step S613, the method further includes the following steps.

At step S603, the PCF receives the subscribe request message.

At step S604, the PCF generates a QoS monitoring policy based on the subscribe request message, in which the QoS monitoring policy is configured for performing QoS monitoring for a data flow and for measuring the RT latency status information.

At step S605, the PCF sends the QoS monitoring policy to an SMF.

In an exemplary embodiment of the disclosure, the PCF receives the subscribe request message sent by the NEF, and generates the QoS monitoring policy according to the subscribe request message. The QoS monitoring policy is configured to perform for performing QoS monitoring for the data flow and for measuring the RT latency status information.

With reference to FIG. 6, between step S605 and step S613, the method further includes the following steps.

At step S606, the SMF receives the QoS monitoring policy.

At step S607, the SMF generates a QoS monitoring configuration corresponding to the QoS monitoring policy based on the QoS monitoring policy.

At step S608, the SMF sends the QoS monitoring configuration to the UPF.

In an exemplary embodiment of the disclosure, after generating the QoS monitoring policy, the PCF sends the QoS monitoring policy to the SMF. The SMF generates the QoS monitoring configuration corresponding to the QoS monitoring policy based on the QoS monitoring policy and sends the QoS monitoring configuration to the UPF.

With reference to FIG. 6, between step S608 and step S612, the method further includes the following steps.

At step S609, the UPF receives the QoS monitoring configuration.

At step S610, the UPF initiates a function for measuring the RT latency status information based on the QoS monitoring configuration.

At step S611, after determining that a reporting condition of the QoS monitoring configuration is met, the UPF sends the report information to the NEF to report a measurement result.

In an exemplary embodiment of the disclosure, after generating the QoS monitoring configuration corresponding to the QoS monitoring policy, the SMF generates then sends the QoS monitoring configuration to the UPF. The UPF initiates the function for measuring the RT latency status information based on the QoS monitoring configuration, and, after determining that the reporting condition of the QoS monitoring configuration is met, sends the report information to the NEF to report the measurement result. The NEF receives the report information sent by the UPF and sends the report information to the AF. In this way, the subscription request of the RT latency status information of XRM service requested to be subscribed is completed. The RT latency status information corresponding to the subscribed XRM service may be accurately obtained during the processing of the XRM service requested to be subscribed.

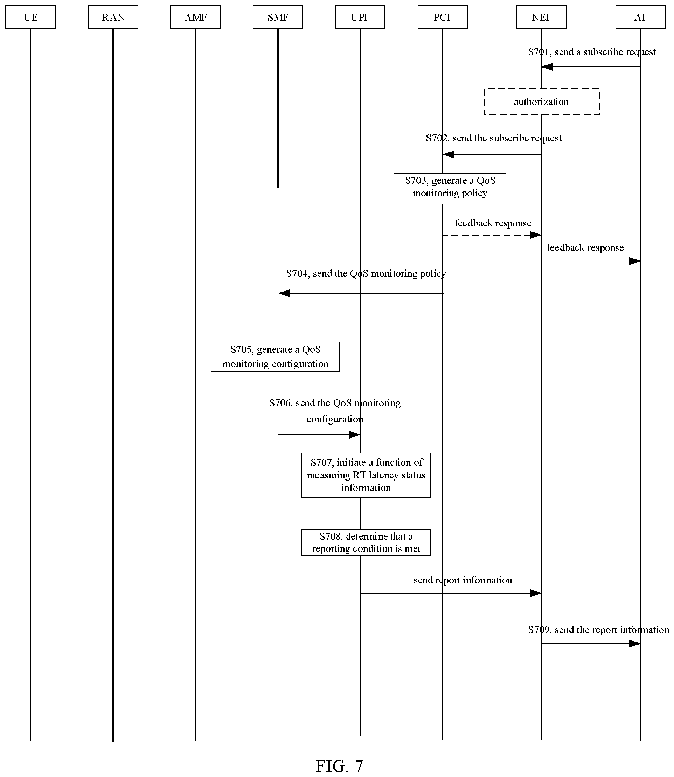

An embodiment of the disclosure provides a method for processing RT latency status information. FIG. 7 is a flowchart of a method for processing RT latency status information according to an exemplary embodiment. As illustrated in FIG. 7, the method includes the following steps.

At step S701, a NEF receives a subscribe request message by receiving a Nnef_EventExposure request message sent by an AF, in which the subscribe request message is configured to request for subscribing RT latency status information of an XRM service.

At step S702, the NEF sends an Npcf_PolicyAuthorization_Subscribe request message to a PCF to send the subscribe request message.

At step S703, the PCF generates a QoS monitoring policy based on the subscribe request message, in which the QoS monitoring policy is configured for performing QoS monitoring for a data flow and for measuring the RT latency status information.

At step S704, the PCF sends an Npcf_SMPolicyControl_UpdateNotifyreques message to a SMF to send the QoS monitoring policy to the SMF.

At step S705, the SMF generates a QoS monitoring configuration corresponding to the PCF based on the QoS monitoring policy.

At step S706, the SMF sends a N4 Session Modification Request message to an UPF to send the QoS monitoring configuration to the UPF.

At step S707, the UPF initiates a function for measuring the RT latency status information based on the QoS monitoring configuration.

At step S708, after determining that a reporting condition of the QoS monitoring configuration is met, the UPF sends a Nupf_EventExposure_Notify message to the NEF to send report information to the NEF, in which the report information includes a measurement result.

At step S709, the NEF sends a Nnef_EventExposure_Notify message to the AF to send the report information to the AF.

When a plurality of PCFs are included, the NEF may send the subscribe request messages to the plurality of PCFs simultaneously. The information included in the subscribe request messages sent to the PCFs may be the same or different. Each PCF generates a corresponding QoS monitoring policy according to the subscribe request message it receives. The PCFs send the generated QoS monitoring policies to the SMF. The SMF generates corresponding QoS monitoring configurations according to the plurality of QoS monitoring policies it receives and sends the QoS monitoring configurations to the UPF. The UPF initiates the function of measuring the RT latency status information according to the plurality of QoS monitoring configurations it receives. After determining that the reporting condition of the QoS monitoring configuration is met, the UPF sends the report information to the NEF. The report information includes the measurement result. The NEF aggregates the plurality of pieces of received report information and sends the aggregated report information to the AF.

In an exemplary embodiment of the disclosure, the AF initiates the subscribe request, and the corresponding subscribe request message may be customized according to the XRM service requested to be subscribed, to accurately obtain the RT latency status information corresponding to the subscribed XRM service during the processing of the XRM service requested to be subscribed.

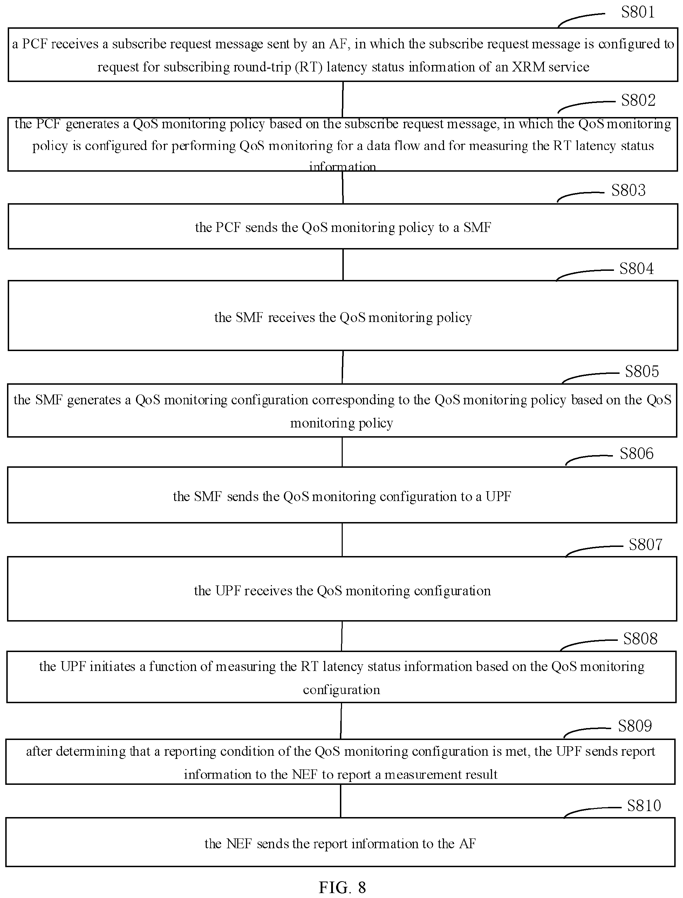

An embodiment of the disclosure provides a method for processing RT latency status information. FIG. 8 is a flowchart of a method for processing RT latency status information according to an exemplary embodiment. As illustrated in FIG. 8, the method includes the following steps.

At step S801, a PCF receives a subscribe request message sent by an AF, in which the subscribe request message is configured to request for subscribing RT latency status information of an XRM service.

In an exemplary embodiment of the disclosure, a method for processing RT latency status information is provided by taking into account a situation in which the latency status is changed dynamically and continuously by being affected by various factors in the network during actual business processes. The PCF receives the subscribe request message sent by the AF. The subscribe request message is configured to request for subscribing the RT latency status information of the XRM service.

In an exemplary embodiment of the disclosure, the AF sends the subscribe request message to the PCF, and the corresponding subscribe request message may be customized according to the XRM service requested to be subscribed, so as to accurately obtain the RT latency status information corresponding to the subscribed XRM service during the processing of the XRM service requested to be subscribed.

As illustrated in FIG. 8, the method also includes the following steps.

At step S802, the PCF generates a QoS monitoring policy based on the subscribe request message, in which the QoS monitoring policy is configured for performing QoS monitoring for a data flow and for measuring the RT latency status information.

At step S803, the PCF sends the QoS monitoring policy to a SMF.

In an exemplary embodiment of the disclosure, the PCF generates the QoS monitoring policy according to the subscribe request message. The QoS monitoring policy is configured for performing the QoS monitoring for the data flow and for measuring the RT latency status information.

As illustrated in FIG. 8, the method also includes the following steps.

At step S804, the SMF receives the QoS monitoring policy.

At step S805, the SMF generates a QoS monitoring configuration corresponding to the QoS monitoring policy based on the QoS monitoring policy.

At step S806, the SMF sends the QoS monitoring configuration to an UPF.

In an exemplary embodiment of the disclosure, after generating the QoS monitoring policy, the PCF sends the QoS monitoring policy to the SMF. The SMF generates the QoS monitoring configuration corresponding to the QoS monitoring policy based on the QoS monitoring policy and sends the QoS monitoring configuration to the UPF.

As illustrated in FIG. 8, the method also includes the following steps.

At step S807, the UPF receives the QoS monitoring configuration.

At step S808, the UPF initiates a function for measuring the RT latency status information based on the QoS monitoring configuration.

At step S809, after determining that a reporting condition of the QoS monitoring configuration is met, the UPF sends report information to the NEF to report a measurement result.

At step S810, the NEF sends the report information to the AF.

In an exemplary embodiment of the disclosure, after generating the QoS monitoring configuration corresponding to the QoS monitoring policy, the SMF sends the QoS monitoring configuration to the UPF. The UPF initiates the function for measuring the RT latency status information based on the QoS monitoring configuration, and sends, after determining that the reporting condition of the QoS monitoring configuration is met, the report information to the NEF to report the measurement result. After receiving the report information sent by the UPF, the NEF sends the report information to the AF. In this way, the subscription request of the RT latency status information of XRM service requested to be subscribed is completed. The RT latency status information corresponding to the subscribed XRM service may be accurately obtained during the processing of the XRM service requested to be subscribed.

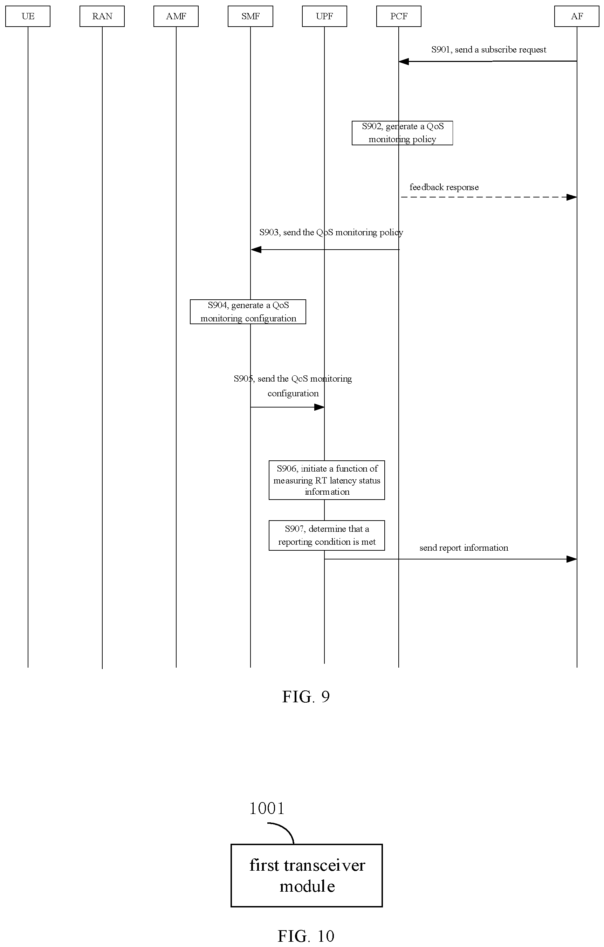

An embodiment of the disclosure provides a method for processing RT latency status information. FIG. 9 is a flowchart of a method for processing RT latency status information according to an exemplary embodiment. As illustrated in FIG. 9, the method includes the following steps.

At step S901, an AF sends a Nnef_EventExposure request message to a PCF to send a subscribe request message, in which the subscribe request message is configured to request for subscribing RT latency status information of an XRM service.

At step S902, after receiving the subscribe request message, the PCF generates a QoS monitoring policy based on the subscribe request message, in which the QoS monitoring policy is configured for performing QoS monitoring for a data flow and for measuring the RT latency status information.

At step S903, the PCF sends an Npcf_SMPolicyControl_UpdateNotifyrequest message to a SMF to send the QoS monitoring policy to the SMF.

At step S904, the SMF generates a QoS monitoring configuration corresponding to the PCF based on the QoS monitoring policy.

At step S905, the SMF sends a N4 Session Modification Request message to an UPF to send the QoS monitoring configuration to the UPF.

At step S906, the UPF initiates a function for measuring the RT latency status information based on the QoS monitoring configuration.

At step S907, after determining that a reporting condition of the QoS monitoring configuration is met, the UPF sends a Nupf_EventExposure_Notify message to the NEF to send report information to the NEF, in which the report information includes a measurement result.

At step S908, the NEF sends a Nnef_EventExposure_Notify message to the AF to send the report information to the AF.

When a plurality of PCFs are included, the AF may send the subscribe request messages to the plurality of PCFs simultaneously. The information included in the subscribe request messages sent to the PCFs may be the same or different. Each PCF generates a corresponding QoS monitoring policy according to the subscribe request message it receives. The PCFs send the generated QoS monitoring policies to the SMF. The SMF generates corresponding QoS monitoring configurations according to the plurality of QoS monitoring policies it receives and sends the QoS monitoring configurations to the UPF. The UPF initiates the function for measuring the RT latency status information according to the plurality of QoS monitoring configurations it receives. After determining that the reporting condition of the QoS monitoring configuration is met, the UPF sends the report information to the NEF. The report information includes the measurement result. The NEF aggregates the plurality of pieces of received report information and sends the aggregated report information to the AF.

In an exemplary embodiment of the disclosure, the AF initiates the subscribe request, and the corresponding subscribe request message may be customized according to the XRM service requested to be subscribed, to accurately obtain the RT latency status information corresponding to the subscribed XRM service during the processing of the subscribed XRM service requested to be subscribed.

With the same conception as the above method embodiments, some embodiments of the disclosure also provide an apparatus for processing RT latency status information. Such an apparatus for processing RT latency status information may have the functions of the NEF in one of the above method embodiments and be configured to perform the steps implemented by the NEF in one of the above embodiments. The functions may be realized by hardware or software or by hardware executing corresponding software. The hardware or software includes one or more modules corresponding to the above-described functions.

In an exemplary embodiment, as illustrated in FIG. 10, FIG. 10 is a schematic diagram of an apparatus for processing RT latency status information according to an exemplary embodiment. The apparatus may act as a NEF involved in one of the above method embodiments and perform the steps performed by the NEF in one of the above method embodiments.

As illustrated in FIG. 10, the apparatus for processing RT latency status information includes: a first transceiver module 1001. The first transceiver module is configured to: receive a subscribe request message sent by an AF, where the subscribe request message is configured to request for subscribing RT latency status information of an XRM service, and to receive report information, which is based on the subscribe request message, and send the report information to the AF.

With the same conception as the above method embodiments, some embodiments of the disclosure also provide an apparatus for processing RT latency status information. Such an apparatus for processing RT latency status information may have the functions of the PCF in one of the above method embodiments and be configured to perform the steps implemented by the PCF in one of the above embodiments. The functions may be realized by hardware or software or by hardware executing corresponding software. The hardware or software includes one or more modules corresponding to the above-described functions.

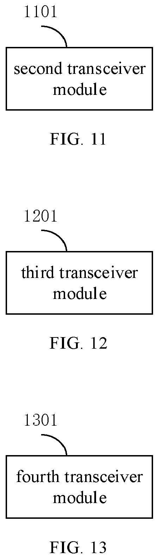

In an exemplary embodiment, as illustrated in FIG. 11, FIG. 11 is a schematic diagram of an apparatus for processing RT latency status information according to an exemplary embodiment. The apparatus may act as a PCF involved in one of the above method embodiments and perform the steps performed by the PCF in one of the above method embodiments.

As illustrated in FIG. 11, the apparatus for processing RT latency status information includes: a second transceiver module 1101. The second transceiver module is configured to: receive a subscribe request message, where the subscribe request message is configured to request for subscribing RT latency status information of an XRM service; and to generate a QoS monitoring policy based on the subscribe request message, where the QoS monitoring policy is configured for performing QoS monitoring for a data flow and for measuring the RT latency status information.

With the same conception as the above method embodiments, some embodiments of the disclosure also provide an apparatus for processing RT latency status information. Such an apparatus for processing RT latency status information may have the functions of the SMF in one of the above method embodiments and be configured to perform the steps implemented by the SMF in one of the above embodiments. The functions may be realized by hardware or software or by hardware executing corresponding software. The hardware or software includes one or more modules corresponding to the above-described functions.

In an exemplary embodiment, as illustrated in FIG. 12, FIG. 12 is a schematic diagram of an apparatus for processing RT latency status information according to an exemplary embodiment. The apparatus may act as a SMF involved in one of the above method embodiments and perform the steps performed by the SMF in one of the above method embodiments.

As illustrated in FIG. 12, the apparatus for processing RT latency status information includes: a third transceiver module 1201. The third transceiver module is configured to: receive a QoS monitoring policy sent by a PCF, and generate a QoS monitoring configuration corresponding to the QoS monitoring policy based on the QoS monitoring policy.

With the same conception as the above method embodiments, some embodiments of the disclosure also provide an apparatus for processing RT latency status information. The apparatus for processing RT latency status information may have the functions of the UPF in one of the above method embodiments and be configured to perform the steps implemented by the UPF in one of the above embodiments. The functions may be realized by hardware or software or by hardware executing corresponding software. The hardware or software includes one or more modules corresponding to the above-described functions.

In an exemplary embodiment, as illustrated in FIG. 13, FIG. 13 is a schematic diagram of an apparatus for processing RT latency status information according to an exemplary embodiment. The apparatus may act as a UPF involved in one of the above method embodiments and perform the steps performed by the UPF in one of the above method embodiments.

As illustrated in FIG. 13, the apparatus for processing RT latency status information includes: a fourth transceiver module 1301. The fourth transceiver module is configured to: receive a QoS monitoring configuration sent by a SMF, and initiate a function for measuring RT latency status information based on the QoS monitoring configuration.

With the same conception as the above method embodiments, some embodiments of the disclosure also provide an apparatus for processing RT latency status information. Such an apparatus for processing RT latency status information is applied to a core network. The functions may be realized by hardware or software or by hardware executing corresponding software. The hardware or software includes one or more modules corresponding to the above-described functions.

In an exemplary embodiment, as illustrated in FIG. 10, the apparatus for processing RT latency status information includes: a first transceiver module 1001. The first transceiver module is configured to: receive, by a NEF, a subscribe request message sent by an AF, in which the subscribe request message is configured to request for subscribing RT latency status information of an XRM service; send, by the NEF, the subscribe request message to a PCF; and receive, by the NEF, report information sent by an UPF and send the report information to the AF.

With the same conception as the above method embodiments, some embodiments of the disclosure also provide an apparatus for processing RT latency status information. Such an apparatus for processing RT latency status information is applied to a core network. The functions may be realized by hardware or software or by hardware executing corresponding software. The hardware or software includes one or more modules corresponding to the above-described functions.

In an exemplary embodiment, as illustrated in FIG. 11, the apparatus for processing RT latency status information includes: a second transceiver module 1101. The second transceiver module is configured to receive, by a PCF, a subscribe request message sent by an AF, in which the subscribe request message is configured to request for subscribing RT latency status information of an XRM service.

With the same conception as the above method embodiments, exemplary embodiments of the disclosure also provide a communication device. Such a communication device includes: a processor and a memory. The memory is configured to store a computer program. The processor is configured to execute the computer program to implement the processing methods of an exemplary embodiment of the disclosure.

The disclosure also provides a computer-readable storage medium having instructions (computer programs/programs) stored therein. When the instructions (computer programs/programs) are called and executed by a computer, the computer is caused to implement the processing methods of an exemplary embodiment of the disclosure.

Obviously, it should be appreciated by those skilled in the art that the above-described processing units or steps may be realized with a general-purpose computing device, which may be centralized on a single computing device or distributed on a network formed by a plurality of computing devices. Optionally, they can be implemented by program codes executable by the computing device, so that they can be stored in a storage device and executed by the computing device, or they can be made into individual integrated circuit modules separately, or multiple modules or steps therein can be made into a single integrated circuit module for implementation. Thus, the disclosure is not limited to any specific combination of hardware and software.

Some preferred embodiments of the disclosure are described above and are not intended to limit the protection scope of the disclosure.

### INDUSTRIAL APPLICABILITY

In an exemplary embodiment of the disclosure, the corresponding subscribe request message may be customized according to the XRM service requested to be subscribed, so that it is possible to accurately obtain the RT latency status information corresponding to the subscribed XRM service during the processing of the XRM service requested to be subscribed.

## Claims

1. A method for processing round-trip (RT) latency status information, applied to a network exposure function (NEF), comprising:
receiving a subscribe request message sent by an application function (AF), wherein the subscribe request message is configured to request for subscribing RT latency status information of an extended reality and media (XRM) service; and
receiving report information, and sending the report information to the AF, wherein the report information is based on the subscribe request message.

2. The method of claim 1, wherein the subscribe request message comprises an event measurement mode requested to be subscribed, and the event measurement mode comprises one of: an indication of calculating an RT latency, a measurement frequency, or a measurement window.

3. The method of claim 1, wherein the subscribe request message comprises an event requested to be subscribed, and the event comprises at least one of: an RT latency value, an uplink latency value, a downlink latency value, and a ratio of the RT latency value to a maximum RT latency value.

4. The method of claim 1, wherein the subscribe request message comprises an event reporting mode requested to be subscribed, the event reporting mode comprises one of: a threshold for triggering reporting or a cycle time interval for triggering reporting, wherein a current threshold is reported in a case that the threshold is reached, or a current value is reported in a case that the cycle time interval is reached.

5. The method of claim 1, wherein the subscribe request message further comprises an immediate reporting sign, wherein the sign indicates that a current value requested is reported immediately upon receipt of a request.

6. The method of claim 1, wherein the subscribe request message further comprises subscription request event filter information to determine a range of a data flow for measuring the RT latency status information;
wherein the subscription request event filter information comprises one or more of:
an RT latency for a range of single network slice selection assistance information (S-NSSAI), an RT latency for the XRM service, an RT latency for all user equipments (UEs) of an XRM service group, an RT latency for an extended reality (XR) service of a preset UE, and an RT latency for the XRM service of S-NSSAI and data network name (DNN).

7. The method of claim 1, further comprising:
sending the subscribe request message to a policy control function (PCF).

8. The method of claim 7, further comprising:
in a case that there are a plurality of PCFs, sending, by the NEF, the subscribe request message to the plurality of PCFs.

9. The method of claim 8, wherein receiving the report information which is based on the subscribe request message, and sending the report information to the AF, comprises:
in a case that a plurality of pieces of report information based on the subscribe request message are received, aggregating, by the NEF, the plurality of pieces of the report information and sending aggregated report information to the AF.

10. A method for processing round-trip (RT) latency status information, applied to a policy control function (PCF), comprising:
receiving a subscribe request message, wherein the subscribe request message is configured to request for subscribing RT latency status information of an extended reality and media (XRM) service; and
generating a quality of service (QoS) monitoring policy based on the subscribe request message, wherein the QoS monitoring policy is configured for performing QoS monitoring for a data flow and for measuring the RT latency status information.

11. The method of claim 10, wherein receiving the subscribe request message, comprises:
receiving the subscribe request message from a network exposure function (NEF); or
receiving the subscribe request message from an application function (AF).

12. The method of claim 11, wherein measuring the RT latency status information comprises: measuring the RT latency status information based on packet latencies of downlink and uplink.

13. The method of claim 12, wherein measuring the RT latency status information based on the packet latencies of the downlink and the uplink comprises: determining, through a sliding window, a maximum latency experienced by a sequence of consecutive packets transmitted in the downlink and a maximum latency experienced by a sequence of consecutive packets transmitted in the uplink.

14. A method for processing round-trip (RT) latency status information, applied to a session management function (SMF), comprising:
receiving a quality of service (QoS) monitoring policy sent by a policy control function (PCF); and
generating a QoS monitoring configuration corresponding to the QoS monitoring policy based on the QoS monitoring policy.

15. A method for processing round-trip (RT) latency status information, applied to a user plane function (UPF), comprising:
receiving a quality of service (QoS) monitoring configuration sent by a session management function (SMF); and
initiating a function for measuring RT latency status information based on the QoS monitoring configuration.

16. The method of claim 15, comprising:
after determining that a reporting condition of the QoS monitoring configuration is met, sending report information to a network exposure function (NEF), wherein the report information comprises a measurement result.

17. A method for processing round-trip (RT) latency status information, performed by a core network device, comprising:
receiving, by a network exposure function (NEF), a subscribe request message sent by an application function (AF), wherein the subscribe request message is configured to request for subscribing RT latency status information of an extended reality and media (XRM) service;
sending, by the NEF, the subscribe request message to a policy control function (PCF); and
receiving, by the NEF, report information sent by a user plane function (UPF), and sending the report information to the AF.

18. The method of claim 17, comprising:
receiving, by the PCF, the subscribe request message;
generating, by the PCF, a quality of service (QoS) monitoring policy based on the subscribe request message, wherein the QoS monitoring policy is configured for performing QoS monitoring for a data flow and for measuring the RT latency status information; and
sending, by the PCF, the QoS monitoring policy to a session management function (SMF).

19. The method of claim 18, further comprising:
receiving, by the SMF, the QoS monitoring policy;
generating, by the SMF, a QoS monitoring configuration corresponding to the QoS monitoring policy based on the QoS monitoring policy; and
sending, by the SMF, the QoS monitoring configuration to the UPF.

20. The method of claim 19, further comprising:
receiving, by the UPF, the QoS monitoring configuration;
initiating, by the UPF, a function for measuring the RT latency status information based on the QoS monitoring configuration; and
after determining, by the UPF, that a reporting condition of the QoS monitoring configuration is met, sending the report information to the NEF to report a measurement result.

21. A method for processing round-trip (RT) latency status information, performed by a core network device, comprising:
receiving, by a policy control function (PCF), a subscribe request message sent by an application function (AF), wherein the subscribe request message is configured to request for subscribing RT latency status information of an extended reality and media (XRM) service.

22. The method of claim 21, further comprising:
generating, by the PCF, a quality of service (QoS) monitoring policy based on the subscribe request message, wherein the QoS monitoring policy is configured for performing QoS monitoring for data flows and for measuring the RT latency status information; and
sending, by the PCF, the QoS monitoring policy to a session management function (SMF).

23. The method of claim 22, further comprising:
receiving, by the SMF, the QoS monitoring policy;
generating, by the SMF, a QoS monitoring configuration corresponding to the QoS monitoring policy based on the QoS monitoring policy; and
sending, by the SMF, the QoS monitoring configuration to a user plane function (UPF).

24. The method of claim 23, comprising:
receiving, by the UPF, the QoS monitoring configuration;
initiating, by the UPF, a function for measuring the RT latency status information based on the QoS monitoring configuration; and
after determining, by the UPF, that a reporting condition of the QoS monitoring configuration is met, sending the report information to a network exposure function (NEF) to report a measurement result.

25. The method of claim 24, further comprising:
sending, by the NEF, the report information to the AF.

26. An apparatus for processing round-trip (RT) latency status information, applied to a network exposure function (NEF), comprising:
a first transceiver module, configured to receive a subscribe request message sent by an application function (AF), wherein the subscribe request message is configured to request for subscribing RT latency status information of an extended reality and media (XRM) service; and to receive report information and send the report information to the AF, wherein the report information is based on the subscribe request message.

27. An apparatus for processing round-trip (RT) latency status information, applied to a policy control function (PCF), comprising:
a second transceiver module, configured to receive a subscribe request message, wherein the subscribe request message is configured to request for subscribing RT latency status information of an extended reality and media (XRM) service; and to generate a quality of service (QoS) monitoring policy based on the subscribe request message, wherein the QoS monitoring policy is configured for performing QoS monitoring for a data flow and for measuring the RT latency status information.

28. An apparatus for processing round-trip (RT) latency status information, applied to a session management function (SMF), comprising:
a third transceiver module, configured to receive a quality of service (QoS) monitoring policy sent by a policy control function (PCF), and generate a QoS monitoring configuration corresponding to the QoS monitoring policy based on the QoS monitoring policy.

29. An apparatus for processing round-trip (RT) latency status information, applied to a user plane function (UPF), comprising:
a fourth transceiver module, configured to receive a quality of service (QoS) monitoring configuration sent by a session management function (SMF), and initiate a function for measuring RT latency status information based on the QoS monitoring configuration.

30. An apparatus for processing round-trip (RT) latency status information, applied to a core network, comprising:
a first transceiver module, configured to: receive, by a network exposure function (NEF), a subscribe request message sent by an application function (AF), wherein the subscribe request message is configured to request for subscribing RT latency status information of an extended reality and media (XRM) service; send, by the NEF, the subscribe request message to a policy control function (PCF); and receive, by the NEF, report information sent by a user plane function (UPF) and send the report information to the AF.

31. An apparatus for processing round-trip (RT) latency status information, applied to a core network, comprising:
a second transceiver module, configured to receive, by a policy control function (PCF), a subscribe request message sent by an application function (AF), wherein the subscribe request message is configured to request for subscribing RT latency status information of an extended reality and media (XRM) service.

32. A communication device, comprising a processor and a memory, wherein
the memory is configured to store a computer program;
the processor is configured to execute the computer program to implement any one or more of the following processing methods:
the method for processing round-trip (RT) latency status information of any one of claims 1-9;
the method for processing RT latency status information of any one of claims 10-13;
the method for processing RT latency status information of claim 14;
the method for processing RT latency status information of claim 15 or 16;
the method for processing RT latency status information of any one of claims 17-20; or
the method for processing RT latency status information of any one of claims 21-25.

33. A computer-readable storage medium having instructions stored therein, wherein when the instructions are called and executed by a computer, the computer is caused to implement any one or more of the following processing methods:
the method for processing round-trip (RT) latency status information of any one of claims 1-9;
the method for processing RT latency status information of any one of claims 10-13;
the method for processing RT latency status information of claim 14;
the method for processing RT latency status information of claim 15 or 16;
the method for processing RT latency status information of any one of claims 17-20; or
the method for processing RT latency status information of any one of claims 21-25.
